**Europäisches Patentamt**

**European Patent Office**

**Office européen des brevets**

(19)

(11) Veröffentlichungsnummer: **0 150 171**
**B1**

(12)

# EUROPÄISCHE PATENTSCHRIFT

(45) Veröffentlichungstag der Patentschrift:
**28.12.88**

(51) Int. Cl.⁴: **F 03 B 17/02**

(21) Anmeldenummer: **85890002.0**

(22) Anmeldetag: **10.01.85**

(54) Verfahren zur Begasung eines Gas-Flüssigkeit-Gemisches.

(30) Priorität: **16.01.84 AT 114/84**

(43) Veröffentlichungstag der Anmeldung:
**31.07.85 Patentblatt 85/31**

(45) Bekanntmachung des Hinweises auf die Patenterteilung:
**28.12.88 Patentblatt 88/52**

(84) Benannte Vertragsstaaten:
**BE CH DE FR GB IT LI LU NL SE**

(56) Entgegenhaltungen:
**FR-A- 2 263 024**

**VDI-ZEITUNG, Band 99, Nr. 30, 21. Oktober 1957, Seiten 1535,1536, VDI Verlag, Düsseldorf, DE; C. PFLEIDERER: "Überschallströmungen von hoher Machzahl bei kleinen strömungsgeschwindigkeiten"**
**W. ALBRING: "ANGEWANDTE STRÖMUNGLEHRE", 4. Auflage, 1970, Seiten 183-194, Verlag Th. Steinkopff, Dresden, DE;**
**H. SIEGLACH: "TECHNISCHE FLUIDMECHANIK", 1982, Seiten 214-230, VDI Verlag, Düsseldorf, DE;**
**PATENTS ABSTRACTS OF JAPAN, Band 2, Nr. 96 (M-294) [1533], 4. Mai 1984; & JP - A - 59 12 200 (SHIMAZU SEISAKUSHO K.K.) 21.01.1984**

Die Akte enthält technische Angaben, die nach dem Eingang der Anmeldung eingereicht wurden und die nicht in dieser Patentschrift enthalten sind.

(73) Patentinhaber: **Braun, Ernst, Dipl.-Ing., Hoher Markt 1, A-1010 Wien (AT)**

(72) Erfinder: **Braun, Ernst, Dipl.-Ing., Hoher Markt 1, A-1010 Wien (AT)**

(74) Vertreter: **Itze, Peter, Dipl.-Ing. et al, Patentanwälte Dipl.-Ing. Leopold Friebel Dipl.-Ing. Peter Itze Amerlingstrasse 8, A-1060 Wien (AT)**

# Beschreibung

Die Erfindung bezieht sich auf ein Verfahren zur Begasung eines Gas-Flüssigkeit-Gemisches.

Ein solches Verfahren ist z. B. bekannt aus der FR-A-2 263 024. Bei dieser bekannten Ausbildung wird über eine Leitung ein Treibstrahl aus Flüssigkeit, der in Rotation versetzt und durch eine Düse beschleunigt wird, in eine Mischkammer eingebracht, in welcher das einzubringende Gas zugeführt wird. Dieser mit Gas durchsetzte Flüssigkeitsstrahl wird durch eine weitere Düse beschleunigt und in ein Rohr eingebracht, in welches durch einen Ringspalt Flüssigkeit aus einem umgebenden Behälter angesaugt wird. Es wird also in einen Strahl eines Gas-Flüssigkeit-Gemisches Flüssigkeit eingesaugt und mit diesem Strahl vermischt. Dieses Gemisch wird dann aus dem umgebenden Behälter abgeführt.

Der gesamte Vorgang geht, wie aus der Düsenform erkennbar, im Unterschallbereich vor sich, wodurch sowohl das Ansaugen des Gases als auch das Verdichten des Gemisches auf Behälterdruck mit schlechtem Wirkungsgrad erfolgt (etwa insgesamt 0,35).

Beim Anmeldungsgegenstand erfolgt das Ansaugen des Gases in einen Strahl aus einem Gas-Flüssigkeit-Gemisch, der eine Geschwindigkeit aufweist, die höher ist als die diesem Gemisch zugeordnete Schallgeschwindigkeit, desgleichen auch die nachfolgende, in einem Verdichtungs- und Kondensationsstoss stattfindende Umwandlung in Druck, wodurch ein hoher Wirkungsgrad erzielt ist. Ausserdem wird die nach dem Verdichtungs- und Kondensationsstoss noch verbleibende Geschwindigkeitsenergie zurückgewonnen.

Bei bekannten Verfahren dieser Art wird das Prinzip der Wasserstrahlpumpe zum Ansaugen des Gases und nachfolgender Verdichtung desselben angewendet. Haben Treibstrahl und Saugstrahl denselben Aggregatzustand, so bedingt die Impulsübertragung bei der Vermischung des schneller strömenden Treibmittels mit dem langsamer strömenden Fördermittel den bekannt schlechten Wirkungsgrad der Wasserstrahlpumpen und aller nach demselben Prinzip arbeitenden Vorrichtungen. Ist das Fördermittel gasförmig, dann ist der Impulsverlust nur gering, jedoch der Verlust im Diffusor sehr gross, so dass auch in diesem Fall der Wirkungsgrad der bekannten, nach diesem Prinzip arbeitenden Vorrichtungen sehr schlecht ist.

Um die grundlegenden Beziehungen der Erfindung zu erläutern, sei auf die Problematik der strömenden Mischungen von Zweiphasengemischen, z. B. von Luft und Wasser, eingegangen. In derartigen Mischungen kann die «Schallgeschwindigkeit» kleine Werte annehmen, wobei unter «Schallgeschwindigkeit» jene Grösse zu verstehen ist, welche für die Bildung der Mach'schen Zahl ausschlaggebend ist (siehe VDI-Zeitung 99, 1957, No. 30, 21. Oktober, «Überschallströmungen von hoher Machzahl bei kleinen Strömungsgeschwindigkeiten» von Carl Pfleiderer, Seite 1535 und 1536; und schliesslich «Grundlagen für Pumpen» von em. Prof. Dipl.-Ing. W. Pohlenz, VEB Verlag Technik, Berlin 1975, Seiten 49 und 41).

Auch Ostwatitsch weist darauf hin, dass in Schaumströmungen bei «Überschallgeschwindigkeiten» alle Erscheinungen auftreten, die aus einphasiger Überschallströmung bekannt sind (siehe «Gasdynamik», Dr. Klaus Ostwatitsch, Wien, Springer Verlag 1952, Seite 440). Die Analogie zwischen Zweiphasenströmung und einphasiger Strömung eines kompressiblen Fluids ist vollkommen. So benötigt man zur Beschleunigung einer Zweiphasenströmung von «Unterschall»- zu «Überschallgeschwindigkeit» ebenfalls eine konvergente-divergente Düse (Lavaldüse) bzw. ist der entgegengesetzte Vorgang nur mittels eines Verdichtungsstosses bzw. einer Reihe von Verdichtungsstössen möglich. Die Vorgänge im Verdichtungsstoss sind bei der Zweiphasenströmung ebenfalls äusserst komplex, wobei das Überraschende dabei ist, dass der Zusammenhang zwischen Stosseintritts- und Stossaustrittsgeschwindigkeit sowie Druckanstieg durch einen Wärmefluss vermittelt wird (siehe «Technische Fluidmechanik» von Herbert Sieglach, VDI Verlag 1982, Seiten 214–230, sowie W. Albring, «Angewandte Strömungslehre», 4. Auflage, Verlag Theodor Steinkopff, Dresden 1970, Seiten 183–194). Durch das Mass der Wärmemenge, die im Stoss vom Unterschall zum Überschall fliesst, ist die Stossintensität bestimmt.

Weiters verhalten sich kompressible Zweiphasenströmungen so, dass sich die Zustandsgrössen – mit Ausnahme der Entropie, der Temperatur und der Ruhetemperatur – im Unter- und Überschallbereich entgegengesetzt verändern (siehe E. Truckenbrodt, «Fluidmechanik», Band 2, Springer Verlag 1980, Seite 68). Es bedeutet z. B. die Wärmezufuhr zu einer Überschallströmung eine Verzögerung, dagegen zu einer Unterschallströmung eine Beschleunigung.

Ein besonderes Problem bedeutet, der Strömung eines Zweiphasengemisches technische Arbeit zu- bzw. abzuleiten. Die dazu erforderlichen Vorrichtungen müssen ganz speziell ausgerüstet sein, da herkömmliche Maschinen Gas-Flüssigkeit-Gemische nicht bzw. nur mit untragbar schlechtem Wirkungsgrad fördern (siehe Franz Mayinger, «Strömung und Wärmeübergang in Gas-Flüssigkeit-Gemischen», Springer Verlag, Wien–New York, 1982, Seite 8). Auch das Ansaugen eines Gases durch einen Treibstrahl erfolgt nur dann mit gutem Wirkungsgrad, wenn ganz bestimmte Bedingungen erfüllt sind.

Erfindungsgemäss wird nun eine mit Gas- bzw. Dampfblasen durchsetzte Flüssigkeit, unter Absenkung ihres Druckes unter den Druck des anzusaugenden Gases, auf eine Geschwindigkeit beschleunigt, die höher als die diesem Zweiphasengemisch zugehörige Schallgeschwindigkeit ist, wonach von diesem auf Überschallgeschwindigkeit beschleunigten Gemischstrahl Gas angesaugt wird, und danach wird die diesem begasten Strahl innewohnende Geschwindigkeitsenergie durch einen Verdichtungs- und Kondensationsstoss teilweise in Druck umgewandelt, wonach die noch vorhandene Geschwindigkeitsenergie in technische Arbeit umgewandelt wird.

Das Gas wird also von dem so auf Überschallgeschwindigkeit beschleunigten Gemischstrahl angesaugt. Diese Gaszufuhr bedingt eine nicht zu vernachlässigende Gewichtszunahme des Gas-Flüssigkeit-Strahles. Die Gewichtszunahme bedeutet, wie schon darauf hingewiesen, gegenteiliges Verhalten von Unterschallströmung und Überschallströmung. Bedingt diese Zufuhr bei Unterschallströmung eine Beschleunigung des Flüssigkeitsstrahles, so erfolgt bei Überschallströmung eine Verzögerung. Hat der Treibstrahl Unterschallgeschwindigkeit und soll er zusätzliches Gewicht aufnehmen, dann ist dies nur möglich, wenn er gleichzeitig beschleunigt wird. Die Energie zur Beschleunigung kann nur aus einer Druckabsenkung gewonnen werden, die aber im Falle des Saugens nicht möglich ist, da der zu beschleunigende Flüssigkeitsstrahl mit dem anzusaugenden Gas bzw. der freien Atmosphäre (bei Luftansaugung) in Verbindung steht und somit der Druck konstant gehalten wird. Hat dagegen der Treibstrahl Überschallgeschwindigkeit, so bedeutet die Gewichtsaufnahme eine Verzögerung. Durch die Verzögerung wird ein Teil der kinetischen Energie frei, der zur Beschleunigung des angesaugten Gases herangezogen wird. Es ist daher für einen guten Wirkungsgrad der Gesamtanlage unbedingt erforderlich, dass zur Gasansaugung der Treibstrahl Überschallgeschwindigkeit hat und diese auch während des gesamten Ansaugevorganges behält.

Nachdem vom Flüssigkeitsstrahl Gas angesaugt wurde, muss die ihm innewohnende Geschwindigkeitsenergie durch einen Verdichtungsstoss teilweise in Druckenergie umgewandelt werden. Dieser Verdichtungsstoss verläuft, solange die Machzahl der in den Stoss eintretenden Strömung klein ist, mit geringem Entropieanstieg, d. h. mit geringen Verlusten. Den Verdichtungsstoss nun zur Kompression in Verdichtern auszunützen, stellt das ideale Mittel zur Druckgewinnung dar, sofern die aus dem Verdichtungsstoss austretende kinetische Energie zurückgewonnen wird.

Danach wird die Stossaustrittsgeschwindigkeit in einer Turbine in technische Arbeit umgewandelt. Da der Stoss nur von Überschall zu Unterschall möglich ist, muss die Stosseintrittsgeschwindigkeit im Überschallbereich liegen, wodurch die Stossaustrittsgeschwindigkeit noch erheblich ist, so dass zur Erreichung eines guten Wirkungsgrades diese Stossaustrittsgeschwindigkeit verwertet werden muss.

Durch die den Stoss beschreibenden Gleichungen wird nämlich gezeigt, dass die Zustände vor und nach dem Stoss in Schallnähe symmetrisch zum kritischen Zustand liegen (siehe «Gasdynamik», K. Ostwatitsch, Wien, Springer Verlag, 1952, Seite 35). Dieselbe Symmetrie gilt auch für den Wärmetransport, so dass die zu- und abgeführten Wärmemengen genau einander entsprechen müssen.

Um die Lage des Verdichtungsstosses genau zu fixieren, ist es zweckmässig, entweder eine lavaldüsenartige Erweiterung oder aber eine Umlenkung des Flüssigkeitsstrahles durchzuführen. Aus der Gasdynamik ist es bekannt, dass die Lage des Verdichtungsstosses in einem divergenten Teil oder aber durch Umlenkung des Flüssigkeitsstrahles fixiert ist (siehe Bruno Eck, «Technische Strömungslehre», 7. Auflage, Springer Verlag 1966, Seiten 400 und 401).

## Patentansprüche

1. Verfahren zur Begasung eines Gas-Flüssigkeitsgemisches gekennzeichnet dadurch, dass das Gemisch unter Absenkung seines Druckes unter den Druck des anzusaugenden Gases auf eine Geschwindigkeit beschleunigt wird, die höher ist als die diesem Zweiphasengemisch zugehörige Schallgeschwindigkeit, wonach von diesem auf Überschallgeschwindigkeit beschleunigten Gemischstrahl das Gas angesaugt wird und dass danach die, diesem begasten Strahl innewohnende Geschwindigkeitsenergie durch einen Verdichtungs- und Kondensationsstoss in Druck umgewandelt wird, wonach die noch vorhandene Geschwindigkeitsenergie in einer Turbine in Rotationsenergie umgewandelt wird.

2. Verfahren nach Anspruch 1, dadurch gekennzeichnet, dass der Verdichtungs- und Kondensationsstoss durch eine lavaldüsenartige Erweiterung des Flüssigkeitsstrahles bewirkt wird.

3. Verfahren nach Anspruch 1 oder 2, dadurch gekennzeichnet, dass der Verdichtungs- und Kondensationsstoss durch Umlenkung des Flüssigkeitsstrahles bewirkt wird.

4. Verfahren nach Anspruch 1, dadurch gekennzeichnet, dass die im Kondensationsstoss anfallende Kondensationswärme stromab dem mit Unterschallgeschwindigkeit strömenden Flüssigkeitsstrahl zugeführt wird.

## Claims

1. Process for gas-absorption by a gas liquid mixture, characterised in that the mixture is accelerated to a velocity above the sonic velocity for this two-phase mixture by reducing its pressure below that of the gas to be absorbed; the gas is then absorbed by this mixture jet that has been accelerated above the velocity of sound, and the kinetic energy stored in the gassed jet is then converted into pressure by a condensing shock-wave, after which the residual kinetic energy is converted into rotational energy by a turbine.

2. Process according to claim 1, characterised in that the condensing shock wave is affected by a dilatation of the liquid jet by a Laval-type nozzle.

3. Process according to claim 1 or 2, characterised in that the condensing shock wave is effected by changing the direction of the liquid jet.

4. Process according to claim 1, characterised in that the condensation heat generated by the condensing shock-wave is transferred downstream to the liquid jet flowing at less than sonic velocity.

## Revendications

1. Procédé d'introduction de gaz dans un mélange gaz-liquide, caractérisé en ce que le mélange sous abaissement de sa pression en dessous de la pression du gaz à aspirer est accéléré à une vitesse qui est supérieure à la vitesse sonique propre à ce mélange à deux phases, le gaz étant aspiré de ce mélange accéléré à une vitesse supersonique et en ce que l'énergie de vitesse inhérente à ce jet introduit est transformée en pression par un choc de compression et de condensation, l'énergie de vitesse encore présente étant transformée en énergie de rotation dans une turbine.

2. Procédé selon la revendication 1, caractérisé en ce que le choc de compression et de condensation est provoqué par un élargissement du type tuyère de l'aval du jet de liquide.

3. Procédé selon la revendication 1 ou la revendication 2, caractérisé en ce que le choc de compression et de condensation est provoqué par déviation du jet de liquide.

4. Procédé selon la revendication 1, caractérisé en ce que la chaleur de condensation générée dans le choc de condensation est introduite en aval du jet de liquide s'écoulant à vitesse supersonique.